COMPLETE DOCUMENT

(19) Europäisches Patentamt
European Patent Office
Office européen des brevets

(11) Publication number: **0 049 397**
**A1**

# (12) EUROPEAN PATENT APPLICATION

(21) Application number: 81107356.8

(22) Date of filing: 17.09.81

(51) Int. Cl.[3]: A 01 N 39/02
//(A01N39/02, 37/26, 37/24, 37/22, 37/20)

(30) Priority: 22.09.80 US 189537

(43) Date of publication of application: 14.04.82 Bulletin 82/15

(84) Designated Contracting States: AT DE FR IT

(71) Applicant: AMERICAN HOECHST CORPORATION
Route 202-206 North
Somerville, N.J. 08876(US)

(72) Inventor: Grande, John Anthony
Oak Grove Road
Pittstown, N.J. 08867(US)

(74) Representative: Meyer-Dulheuer, Karl-Hermann, Dr. et al,
HOECHST Aktiengesellschaft Zentrale Patentabteilung
Postfach 80 03 20
D-6230 Frankfurt/Main 80(DE)

## (54) A herbicidal composition.

(57) A herbicidal composition and a method utilizing such a composition for combatting weed grasses is disclosed. The composition comprises an α-halo-acetanilide and a 4-phenoxy-phenoxy-alkane carboxylic acid or derivative thereof.

EP 0 049 397 A1

BACKGROUND OF THE INVENTION

TITLE
see [illegible] page

Field of the Invention

This invention relates to a herbicidal composition and more particularly, to a composition comprising an α-halo-acetanilide and a 4-phenoxy-phenoxy-alkane carboxylic acid or derivative thereof

Discussion of the Prior Art

Phytotoxic α-halo-acetanilides are disclosed in U.S. Patent No. 3,442,945. These materials although very effective as preemergence herbicides against annual grassy weeds have been found not to be generally effective against such weed grasses once the weed grass has reached the one to two leaf stage of growth. An improved herbicide containing an α-halo-acetanilide which is effective at all timings, i.e.; both at preemergence applications and at postemergence applications, is needed and is desired.

U.S. Patent 3,954,442 reveals herbicidal compositions comprising 4-phenoxy-phenoxy alkane carboxylic acids and derivatives thereof. Surprisingly and unexpectedly, it has been found that certain of these acids and derivatives thereof when combined with the α-halo-acetanilides discussed above, lead to a post-emergence effect against weed grasses even after such weed grasses have reached the one or two leaf stage.

SUMMARY OF THE INVENTION

The present invention is directed to a herbicidal composition and more particularly, to a composition comprising an α-halo-acetanilide and a 4-phenoxy-phenoxy-alkanecarboxylic acid or a derivative thereof.

The composition comprises (1) an α-haloacetanilide selected from the group consisting of

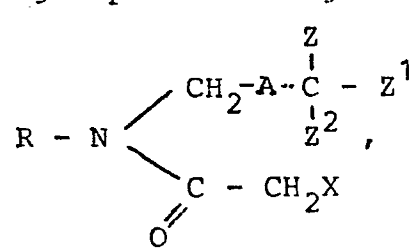
,

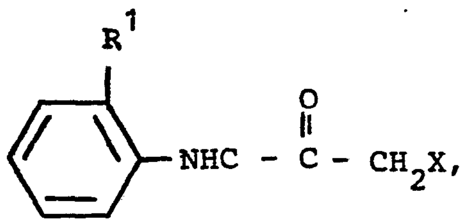 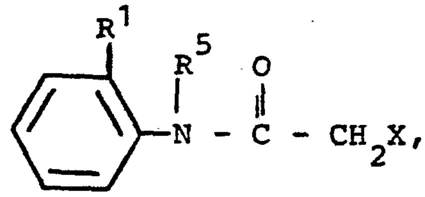 and

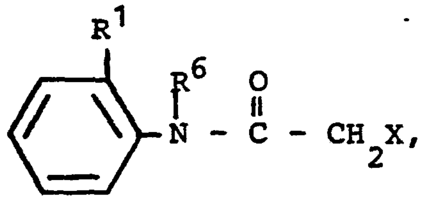

wherein R is alkyl having a maximum of 18 carbon atoms or phenyl of the structure

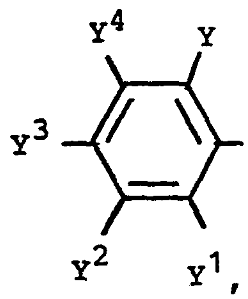

where Y and $Y^1$ are hydrogen, alkyl or alkoxy having a maximum of 10 carbon atoms, and $Y^2$ and $Y^3$ and $Y^4$ are hydrogen, halogen, or alkyl having a maximum of 10 carbon atoms; A is oxygen or sulfur; X is chlorine, bromine or iodine; and Z, $Z^1$ and $Z^2$ are hydrogen alkyl, alkenyl, alkynyl, alkoxy or polyalkoxy each of from1 to 18 carbon atoms, aryl having from 6 to 24 carbon atoms, heterocyclyl having a maximum of 24 carbon atoms and from 1 to 3 hetero atoms, or two of the Z groups are combined to form a bivalent alkylene radical having from 2 to 6 carbon atoms; $R^1$ is tertiary alkyl of not less than 4 and a maximum of 10 carbon atoms; $R^2$ is hydrogen, halogen, alkyl of not more than 8 carbon atoms or alkoxy of not more than 4 carbon atoms; $R^3$ is hydrogen, primary or secondary alkyl of each of not more than 6 carbon atoms, chloride or nitro, provided that one and not more than one of $R^2$ and $R^3$ is always hydrogen unless $R^2$ is primary or secondary alkyl in which case $R^3$ is as defined above and further provided that $R^2$ is primary or secondary alkyl when $R^3$ is chloride

or nitro; $R^4$ is alkyl of not more than 8 carbon atoms; $R^5$ is primary or secondary alkyl, alkenyl, alkoxyalkyl or alkynyl each of not more than 6 carbon atoms; $R^6$ is primary alkyl, alkenyl or alkynyl, each of not more than 4 carbon atoms; and X is chlorine, bromine or iodine; and (2) a 4-phenoxy-phenoxy alkane carboxylic compound having a structural formula

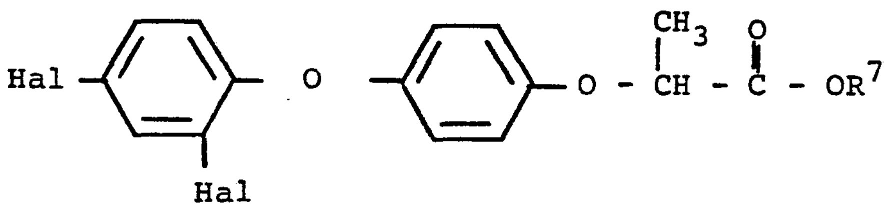

where Hal is a halogen and $R^7$ represents hydrogen, alkyl having 1 to 10 carbon atoms, or the cation of an acceptable inorganic or organic base.

DETAILED DESCRIPTION

The present invention is described primarily in terms of an improved herbicidal composition compromising 2-chloro-2',6'-diethyl-N-(methoxymethyl) acetanilide and methyl 2-(4-(2,4-dichlorophenoxy) phenoxy propanoate, however, it will be understood that such description is exemplary only and is for purposes of exposition and not for purposes of limitation. It will be readily appreciated that the inventive concept described is equally applicable to an improved herbicidal composition comprising any suitable α-haloacetanilide and the α-phenoxyphenoxy alkane carboxylic acid corresponding to the above-described ester and any suitable ester or salt thereof.

A first herbicidal component comprising a suitable α-haloacetanilide is selected. A suitable α-haloacetanilide is one selected from

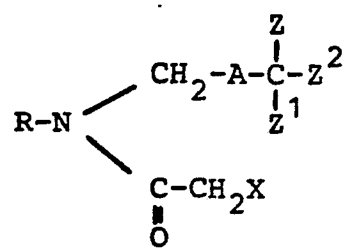

(I)

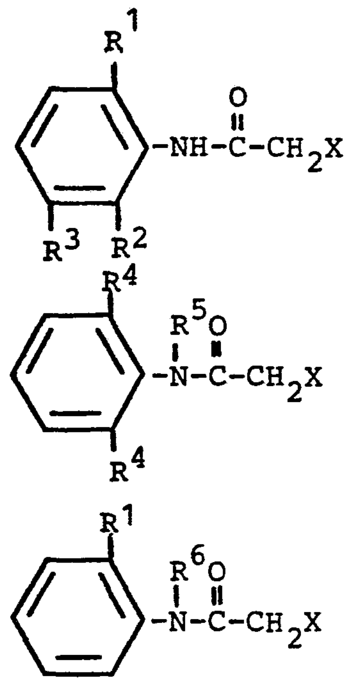

(II)

wherein R is alkyl having a maximum of 18 carbon atoms, or phenyl of the structure

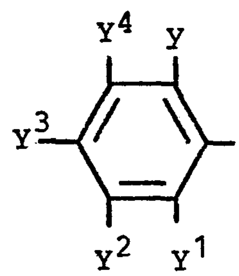

with Y and $Y^1$ being hydrogen, alkyl or alkoxy having a maximum of 10 carbon atoms, and $Y^2$, $Y^3$ and $Y^4$ being hydrogen, halogen, or alkyl having a maximum of 10 carbon atoms;

A is oxygen or sulfur; X is chlorine, bromine, or iodine; and Z, $Z^1$ and $Z^2$ are hydrogen, alkyl, alkenyl, alkynyl, alkoxy or polyalkoxy having from 1 to 18 carbon atoms,

aryl having from 6 to 24 carbon atoms, heterocyclyl having a maximum of 24 carbon atoms and from 1 to 3 hetero atoms, or two of Z groups are combined to form a bivalent alkylene radical having from 2 to 6 carbon atoms. One or more of the Z groups can be provided with non-interfering substituents including halogen, hydroxy, alkoxy, nitro, dialkylamino, carbalkoxy, keto groups and the like. Unless otherwise indicated, "alkyl" is used generically to include primary, secondary and tertiary alkyl groups; $R^1$ is tertiary alkyl of not less than 4 and a maximum of 10 carbon atoms, $R^2$ is hydrogen, halogen, alkyl of not more than 8 carbon atoms or alkoxy of not more than 4 carbon atoms, $R^3$ is hydrogen, primary or secondary alkyl of not more than 6 carbon atoms, chloride or nitro, provided that one and not more than one of $R^2$ and $R^3$ is always hydrogen unless $R^2$ is primary or secondary alkyl in which case $R^3$ is as defined above and further provided that $R^2$ is primary or secondary alkyl when $R^3$ is chloride or nitro.

$R^4$ is alkyl of not more than 8 carbon atoms, $R^5$ is primary or secondary alkyl, alkenyl, alkoxyalkyl or alkynyl,and of not more than 6 carbon atoms, $R^6$ is primary alkyl, alkenyl or alkynyl, and of not more than 4 carbon atoms, and X is chlorine, bromine or iodine.

Such suitable α-haloacetanilides and their preparation are revealed in U.S. Patent 3,442,945, which is incorporated by reference hereinto.

A second herbicidal component comprising a suitable α -phenoxy-phenoxy alkane carboxylic acid or an ester or salt thereof is selected. A suitable α-phenoxy-phenoxy alkane carboxylic acid and derivatives thereof is represented by the formula

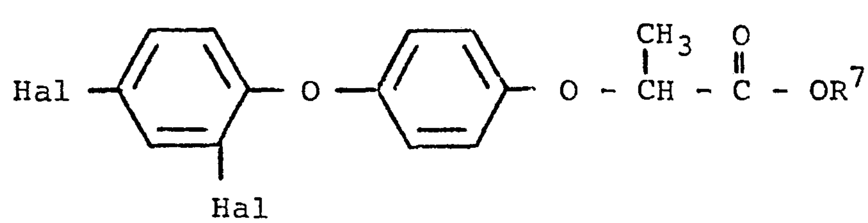

where Hal is a halogen selected from F; Cl, Br, and I, and $R^7$ represents hydrogen, alkyl of 1 to 10 carbon atoms, or the cation of an acceptable inorganic or organic base. Preferably , where $R^7$ is alkyl, the carbon content thereof is from 1 to 3 carbon atoms and most preferably $R^7$ is methyl. Most preferred is methyl-2-(4-(2,4-dichlorophenoxy) phenoxy propanoate which is commercially available as Hoelon (R) 3EC or HOE-23408 from American Hoechst Corporation.

Such suitable α-phenoxy-phenoxy alkane carboxylic acids, their esters and their salts and the preparation thereof are described in U.S. Patent 3,954,442, incorporated by reference hereinto which in turn makes specific response to German Offenlegungsschrift 1,668,896.

At least one first and at least one second herbicidal component are combined to form the desired herbicidal active ingredient. The concentration of the second herbicidal component is not critical and is typically combined with the first component in an amount sufficient to impart postemergence effectiveness to grassy weeds in the one to three leaf stage of growth. Typically, the second component is combined with the α-haloacetanilide in an amount ranging from about 5 to about 75 percent by weight of herbicidal active ingredient. Surprisingly, and unexpectedly, it has been found that the combination of the herbicidal components and the use of the resultant herbicidal active ingredient in a herbicidal composition results in an effect which is not to be expected, namely upon post-emergence application there is an increase in the kill rate of the grassy weeds as reflected by a lower grass count.

Herbicidal compositions contain the resultant herbicidal active ingredient in an amount of from about 2 to about 95 percent by weight. The herbicidal compositions can be used in the form of wettable powders, emulsifiable concentrates, sprayable solutions, dusts or granules, in admixtures with the usual formulation auxiliaries.

Wettable powders are preparations that can be uniformly dispersed in water and contain, besides the active ingredient, a diluent or an inert substance, a wetting agent, for example polyoxethylated alkylphenols, polyoxethylated oleyl- or stearylamines, alkyl- or alkylphenyl sulfonates, and dispersing agents, for example the sodium salt of lignin-sulfonic acid, of 2,2'-dinaphthylmethane-6,6'-disulfonic acid, of dibutyl-sulfonic acid or sodium oleylmethyltauride.

Emulsion concentrates are obtained by dissolving the active ingredient in an organic solvent, for example butanol, cyclohexanone, dimethylformamide, xylene, or aromatic hydrocarbons having a higher boiling point. To obtain suspensions or emulsions in water having good properties, wetting agents as specified above are also added.

Dusting powders are obtained by grinding the active ingredient with finely divided, solid substances, for example talc, natural clays such as kaolin, bentonite, pyrophillite, or diatomaceous earths.

Spraying solutions commercially available as aerosol sprays contain the active ingredient dissolved in an organic solvent, and in addition thereto a propellant, for example a mixture of fluorochlorohydrocarbons.

Granules can be produced by atomizing the active ingredient on to an adsorptive, granulated inert material, or by applying concentrates of the active ingredient to the surface of a support, for example sand, kaolinite or a granulated inert material, with the aid of an adhesive, for example polyvinyl alcohol, the sodium salt of polyacrylic acid, or mineral oils. Alternatively, suitable active ingredients may be made into granules, if desired in admixture with fertilizers, in the manner commonly used for the manufacture of granulated fertilizers.

The commercial herbicidal preparations contains varying concentrations of the active ingredients. In wettable powders the concentration of active ingredient varies, for example, from about 10 % to 95 %, the remainder being the above formulation additives. Emulsion

concentrates contain about 10 % to 80 % of active ingredient, while dusting powders mostly contain 5 % to 20 % of active ingredient and sprayable solutions about 2 % to 20 %. In the case of granules, the content of active ingredient partially depends on whether the active ingredient is liquid or solid and on the type of granulation auxiliary or filler used.

For application the commercial concentrates are optionally diluted in the usual manner, the wettable powder or emulsifiable concentrate, for example with water. Dusts and granulated formulations as well as sprayable solutions are not diluted further with an inert substance before their application. The amount applied varies with the external conditions, such as temperature, humidity and the like. In general, about 0.015 to 0.25 gram and perferably about 0.03 to 0.12 gram of active ingredient per square meter are used.

It is of course understood that the herbicidal active ingredient of the present invention can be combined with other herbicides, soil insecticides and with fertilizers.

EXAMPLE

A naturally occurring infestation of barnyard grass (Echinocholoa crus-galli) and giant foxtail (seteria faberii) was treated at three stages of growth, i.e., pre-emergence, at cracking of the ground and at post emergence. The field was treated with 2-chloro-2',6'-diethyl-N-(methoxy-methyl)acetonilide alone, methyl-2-(4-(2,4-dichlorophenoxy)-phenoxy propanoate alone, and a mixture of the foregoing components. There was an overall improved result using the mixture of components as compared to the invidiudal components alone. The mixture of components in the post emergent application thereof exhibited a surprising and unexpected degree of improvement.

After application, the weed grasses were visually observed within a 3 aquare foot area and both the grass

counts (reflecting the kill rate) and the grass height (reflecting the vigor of the surviving weed plant) were determined. Listed below in Tables I, II, III and IV are the results for all three timings.

Tables I, II, III and IV reveal an overall improved result when a mixture of components of the invention is employed. Reviewing the data contained in Tables I, II and III, in the light of the test for synergism revealed by Colby, Weeds, Jan. 1967, pp. 20 - 22, results indicating synergism are obtained. Those results indicating the contrary are as yet unexplainable. Reference is made to Table V, below, which reveals the data for synergism.

In arriving at the results listed in Table V below, the average of the "control"plots for Tables I and III were averaged, i.e., 6 replications and these numbers were included as "control" data for pre emergence, at cracking and post emergence. The method employed, as in Weeds, is as follows: Assuming $X_1$ is the percentage of plants not killed by herbicide A at the dose p, and Y is the percentage of plants not killed by herbicide B at the dose q, the 'expected' percentage, E, of plants not killed by the mixture (A+B) at the dose (p+q) is:

$$E_1 = \frac{X_1 - Y_1}{100}$$

Then, it is only necessary to compare $E_1$ with the actual percentage, E, of plants not killed by (A+B) at the dose (p+q) to know the character of the combined action of the two herbicides. If $E_1$ is higher than E, there is synergy. In the opposite case, there is antagonism.

## TABLE I

PRE-EMERGENCE TREATMENT

| AGENT[1] | RATE (lb./A) | REPLICATES | ACTUAL GRASS COUNT (GRASS PLANTS/3FT.$^2$) | AVERAGE GRASS COUNT (GRASS PLANTS/3FT.$^2$) | GRASS HEIGHT (INCHES) | AVERAGE GRASS HEIGHT (INCHES) |
|---|---|---|---|---|---|---|
| A | .25 | 101 | 88 | | 2.35 | |
| | | 404 | 56 | 77 | 3.1 | 3.05 |
| | | 504 | 88 | | 3.7 | |
| A+ | .25+ | 102 | 24 | | 1.6 | |
| B | .75 | 303 | 26 | 30 | 1.3 | 1.7 |
| | | 508 | 41 | | 2.3 | |
| B | .75 | 103 | 38 | | 2.0 | |
| | | 305 | 39 | 65 | 2.1 | 1.8 |
| | | 506 | 117 | | 1.3 | |
| A | .5 | 104 | 38 | | 2.2 | |
| | | 307 | 71 | 85 | 2.6 | 3.3 |
| | | 509 | 147 | | 5.2 | |
| A+ | .5+ | 105 | 4 | | 2.6 | |
| B | .75 | 304 | 26 | 16 | 2.1 | 2.4 |
| | | 609 | 18 | | 2.4 | |
| B | 1.5 | 106 | 19 | | .6 | |
| | | 306 | 23 | 59 | .8 | .9 |
| | | 502 | 134 | | 1.3 | |
| Control | -- | 107 | 108 | | 1.9 | |
| | | 308 | 143 | 116 | 4.2 | 2.4 |
| | | 606 | 96 | | 1.1 | |

1. Agent A is methyl-2-(4-(2,4-dichlorophenoxy(phenoxy propanoate
   Agent B is 2-chloro-2',6'-diethyl-N-(methoxymethyl)acetanilide

## TABLE II

TREATMENT AT CRACKING [1]

| AGENT[2] | RATE (1B./A) | REPLICATES | ACTUAL GRASS COUNT (GRASS PLANTS/3FT.$^2$) | AVERAGE GRASS COUNT (GRASS PLANTS/3FT.$^2$) | GRASS HEIGHT (INCHES) | AVERAGE GRASS HEIGHT (INCHES |
|---|---|---|---|---|---|---|
| A | .25 | 108 | 133 | | 2.5 | |
| | | 302 | 43 | 92 | 1.9 | 2.4 |
| | | 602 | 100 | | 2.7 | |
| A+ | .25+ | 109 | 32 | | 1.3 | |
| B | .75 | 310 | 20 | 95 | 1.6 | 1.5 |
| | | 501 | 234 | | 1.7 | |
| B | .75 | 110 | 111 | | 1.0 | |
| | | 401 | 76 | 80 | 1.5 | 1.1 |
| | | 603 | 54 | | .74 | |
| A+ | .5+ At | 202 | 3 | | .3 | |
| B | .75 Crack- | 409 | 14 | 21 | .9 | .8 |
| | ing | 507 | 46 | | 1.1 | |
| B | 1.5 At | 203 | 35 | | .6 | |
| | Crack- | 301 | 48 | 72 | .6 | .55 |
| | ing | 510 | 133 | | .45 | |

1. 0, 7, 5 plants/ft.$^2$
2. Agent A is methyl-2-(4-(2,4-dichlorophenoxy)phenoxy propanoate
   Agent B is 2-chloro-2',6'-diethyl-N-(methoxymethyl)acetanilide

TABLE III

POST EMERGENT TREATMENT

| AGENT[2] | RATE (lb./A) | REPLICATES | ACTUAL GRASS COUNT (GRASS PLANTS/3FT.$^2$) | AVERAGE GRASS COUNT (GRASS PLANTS/3.FT.$^2$) | GRASS HEIGHT (INCHES) | AVERAGE GRASS HEIGHT (INCHES) |
|---|---|---|---|---|---|---|
| A | .25 | 204 | 16 | | .5 | |
| | | 402 | 75 | 32 | 1.95 | 1.4 |
| | | 608 | 5 | | 1.8 | |
| A+ | .25+ | 205 | 1 | | .25 | |
| B | .75 | 405 | 5 | 20 | 1.1 | .75 |
| | | 505 | 55 | | .9 | |
| B | .75 | 206 | 30 | | .6 | |
| | | 407 | 59 | 45 | 2.1 | 1.4 |
| | | 610 | 46 | | 1.4 | |
| A | .5 | 207 | 9 | | .9 | |
| | | 403 | 5 | 27 | .3 | .7 |
| | | 503 | 67 | | .8 | |
| A+ | .5+ | 208 | 2 | | 1.7 | |
| B | .75 | 406 | 8 | 4 | .5 | .9 |
| | | 604 | 3 | | .45 | |
| B | 1.5 | 209 | 55 | | .8 | |
| | | 408 | 89 | 108* | .8 | .96 |
| | | 601 | 180 | | 1.3 | |
| Control | -- | 210 | 255 | | 3.4 | |
| | | 410 | 264 | 194 | 5.1 | 3.4 |
| | | 607 | 62 | | 1.7 | |

1. Spike to 3 leaf: 13, 19, 47 plants/ft.$^2$

2. Agent A is methyl-2-(4-(2,4-dichlorophenoxy)phenoxy propanoate
   Agent B is 2-chloro-2',6'-diethyl-N-(methoxymethyl)acetanilide

* The section of the field had a greater infestation pressure which would explain the apparent inconsistency for the grass count of 0.75 B, above.

Average Grass Count per Treatment of all Timings:

| Treatment | Grass Count | Average* |
|---|---|---|
| 1. A(0.25 lb.) | 77<br>92<br>32 | 67 |
| 2. A(0.25 lb.) + B(0.75 lb.) | 30<br>95<br>30 | 48 |
| 3. B(0.75 lb.) | 65<br>80<br>45 | 63 |
| 4. A(0.5 lb.) | 85<br>53<br>27 | 55 |
| 5. A(.5 lb.) + B(.75 lb.) | 16<br>21<br>4 | 13 |
| 6. B(1.5 lb.) | 59<br>72<br>108 | 79 |
| 7. Control | 116<br>194 | 155 |

*Average grass count per treatment of 3 timings (pre, at cracking, and post emergence)

A is methyl-2-(4-(2,4-dichlorophenoxy)phenoxy propanoate

B is 2-chloro-2',6'-diethyl-N-(methoxymethyl)acetanilide

A. Preemergence Calculations:

1) Agent A (.25 lb.) and Agent B (.75 lb.) vs the combination of Agent AB

| | E | $E_1$ | Synergism |
|---|---|---|---|
| a) grass counts: | 19 | 21 | + |
| b) grass height: | 59 | 65 | + |

2) Agent A (.5 lb.) and Agent B (.75 lb.) vs the combination of Agent AB

| | E | $E_1$ | Synergism |
|---|---|---|---|
| a) grass counts: | 10 | 23 | + |
| b) grass height: | 83 | 71 | - |

B. "At Cracking" Calculations:

1) Agent A (.25 lb.) and Agent B (.75 lb.) vs the combination of Agent AB

| | E | $E_1$ | Synergism |
|---|---|---|---|
| a) grass counts: | 61 | 30.7 | - |
| b) grass height: | 52 | 31.5 | - |

2) Agent A (.5 lb.) and Agent B (.75 lb.) vs the combination of Agent AB

| | E | $E_1$ | Synergism |
|---|---|---|---|
| a) grass counts: | 14 | 17.7 | + |
| b) grass height: | 28 | 18.2 | - |

C. Postemergence Calculations:

1) Agent A (.25 lb.) and Agent B (.75 lb.) vs the combination of Agent AB

| | E | $E_1$ | Synergism |
|---|---|---|---|
| a) grass counts: | 13 | 6.0 | - |
| b) grass height: | 26 | 23.0 | - |

2) Agent A (.25 lb.) and Agent B (.75 lb.) vs the combination of Agent AB

| | E | $E_1$ | Synergism |
|---|---|---|---|
| a) grass Counts: | 3 | 4.93 | + |
| b) grass height: | 31 | 14.8 | - |

Patent Claims:

1. A herbicidal composition comprising an active ingredient comprising (1) an $\alpha$-haloacetanilide selected from the groups consisting of

(I) 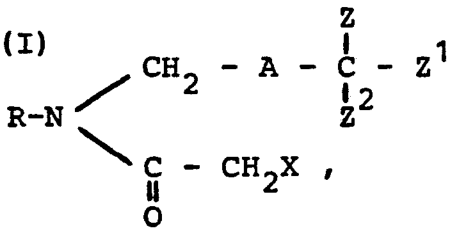

(II) 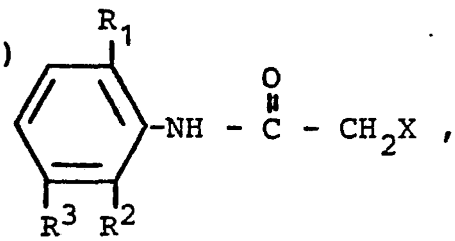

(III) 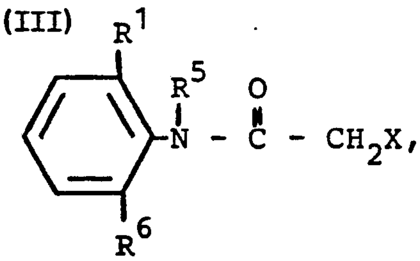

and

(IV) 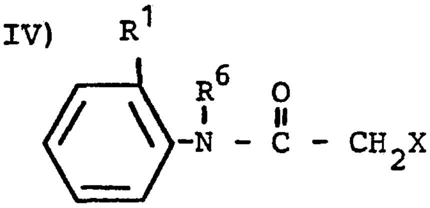

wherein R is alkyl having a maximum of 18 carbon atoms, or phenyl of the structure

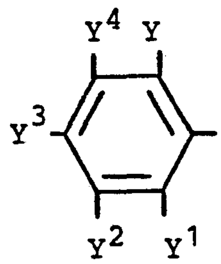

with Y and $Y^1$ being hydrogen, alkyl or alkoxy having a maximum of 10 carbon atoms, and $Y^2$, $Y^3$ and $Y^4$ being hydrogen, halogen, or alkyl having a maximum of 10 carbon atoms, A is oxygen or sulfur, X is chlorine, bromine, or iodine, and Z, $Z^1$ and $Z^2$ are hydrogen, alkyl, hydroxyalkyl, haloalkyl, alkenyl, alkynyl, alkoxy or polyalkoxy having from 1 to 18 carbon atoms, aryl having from 6 to 24 carbon atoms, heterocyclyl having a maximum of 24 carbon atoms and from 1 to 3 hetero atoms, or two of Z groups are combined to form a bivalent alkylene radical having from 2 to 6 carbon atoms.

$R^1$ is tertiary alkyl of not less than 4 and a maximum of 10 carbon atoms,

$R^2$ is hydrogen, halogen, alkyl of not more than 8 carbon atoms or alkoxy of not more than 4 carbon atoms,

$R^3$ is hydrogen, primary or secondary alkyl of not more than 6 carbon atoms, chloride or nitro, provided that one and not more than one of $R^2$ and $R^3$ is always hydrogen unless $R^2$ is primary or secondary alkyl in which case $R^3$ is as defined above further provided that $R^2$ is primary or secondary alkyl when $R^3$ is chloride or nitro.

$R^4$ is alkyl of not more than 8 carbon atoms,

$R^5$ is primary or secondary alkyl, alkenyl, alkoxyalkyl or alkynyl each of not more than 6 carbon atoms,

$R^6$ is primary alkyl, alkenyl or alkynyl, each of not more than 4 carbon atoms, and

X is chlorine, bromine or iodine, and (2) a 4-phenoxy-phenoxy alkane carboxylic compound having a structural formula

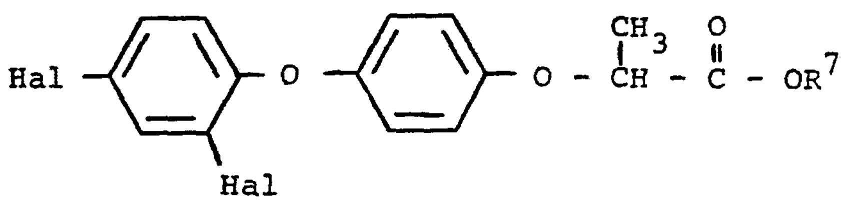

where Hal is a halogen and $R^7$ represents hydrogen, alkyl having 1 to 10 carbon atoms or the cation of an acceptable inorganic or organic base.

2. The composition as defined in Claim 1 wherein $R^7$ is alkyl having 1 to 3 carbon atoms.

3. The composition as defined in Claim 2 wherein Hal is chlorine.

4. The composition as defined in Claim 4 which comprises

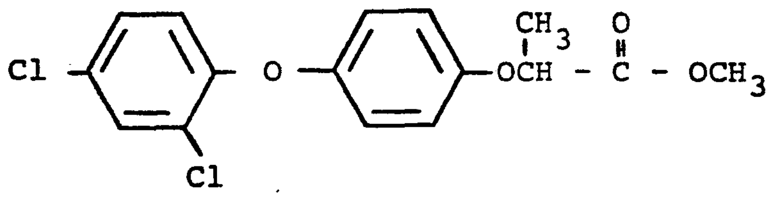

5. The composition as defined in Claim 4 which comprises

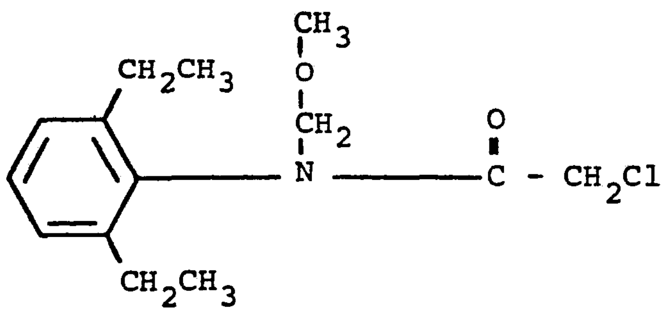

6. A method for combatting weed grasses in plantings of dicotylendenous crops which comprises applying to the planting site an effective concentration of a herbicidal composition comprising an active ingredient comprising (1) an α-haloacetanilide selected from the group

(I) 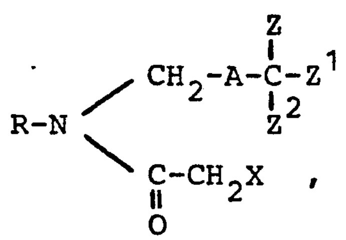 ,

(II) 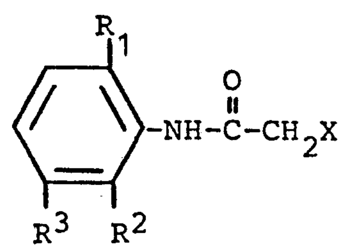 ,

(III) 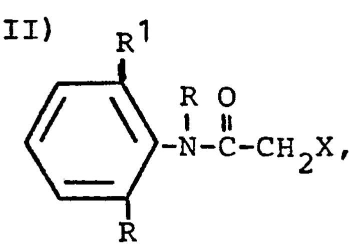 , and (IV) 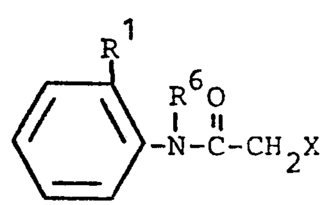

wherein R is alkyl having a maximum of 18 carbon atoms, or phenyl of the structure

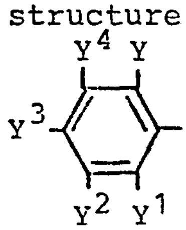

with Y and $Y^1$ being hydrogen, alkyl or alkoxy having a maximum of 10 carbon atoms, and $Y^2$, $Y^3$, and $Y^4$ being hydrogen, halogen, or alkyl having a maximum of 10 carbon atoms, A is oxygen or sulfur, X is chlorine, bromine, or iodine, and Z, $Z^1$ and $Z^2$ are hydrogen, alkyl, hydroxyalkyl, haloalkyl, alkenyl, alkynyl, alkoxy or polyalkoxy having from 1 to 18 carbon atoms, aryl having from 6 to 24 atoms, heterocyclyl having a maximum of 24 carbon atoms and from 1 to 3 hetero atoms, or two of Z groups are combined to form a bivalent alkylene radical having from 2 to 6 carbon atoms.

$R^1$ is tertiary alkyl of not less than 4 and a maximum of 10 carbon atoms,

$R^2$ is hydrogen, halogen, alkyl of not more than 8 carbon atoms or alkoxy of not more than 4 carbon atoms,

$R^3$ is hydrogen, primary or secondary alkyl of not more than 6 carbon atoms, chloride or nitro provided that one and not more than one of $R^2$ and $R^3$ is always hydrogen unless $R^3$ is primary or secondary alkyl in which case $R^3$ is as defined above and further provided that $R^2$ is primary or secondary when $R^3$ is chloride or nitro.

$R^4$ is alkyl of not more than 8 carbon atoms,

$R^5$ is primary or secondary alkyl, alkenyl, alkoxyalkyl or alkynyl, each of not more than 6 carbon atoms,

$R^6$ is primary alkyl, alkenyl or alkynyl, each of not more than 4 carbon atoms, and

X is chlorine, bromine or iodine, and (2) a 4-phenoxy-phenoxy alkane carboxylic compound having a structural formula

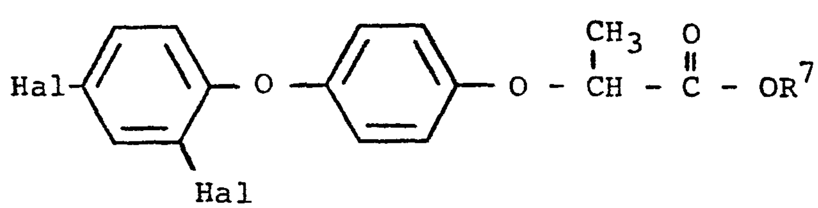

where Hal is a halogen and $R^7$ represents hydrogen, alkyl having 1 to 10 carbon atoms or the cation of an acceptable inorganic or organic base.

7. The method as defined in Claim 6 wherein said composition contains said active ingredient in an amount of from about 2 to 95 percent by weight of said composition.

8. The method as defined in Claim 6 wherein said active ingredient comprises said carboxylic compound where $R^7$ is alkyl of 1 to 3 carbon atoms.

9. The method as defined in Claim 8 wherein said active ingredient comprises said carboxylic compound where Hal is chlorine.

10. The method as defined in Claim 9 wherein said active ingredient comprises methyl-2-(4-(2,4-dichloro-phenoxy) phenoxy propanoate having the structural formula

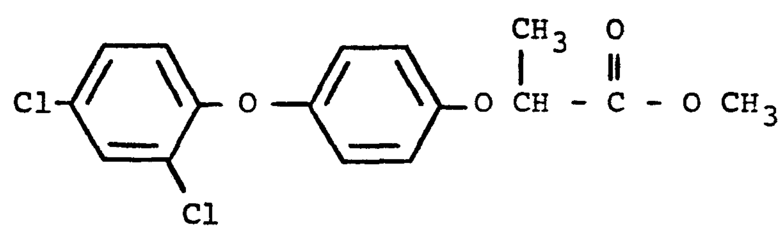

11. The method as defined in Claim 10 wherein said active ingredient comprises 2-chloro-2',6'-diethyl-N-(methoxymethyl)acetanilide, having the structural formula,

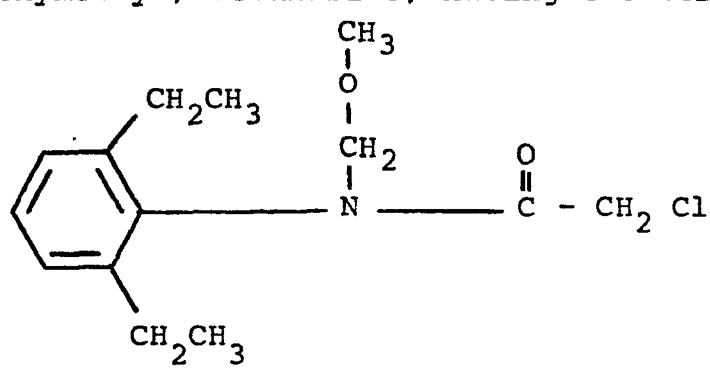

12. A method for combatting weed grasses in plantings of cereal crops which comprises applying to the planting site an effective concentration of a herbicidal composition comprising an active ingredient comprising (1)

an α-haloacetanilide selected from the group consisting of

(I) 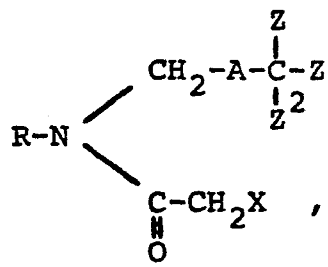 ,

(II) 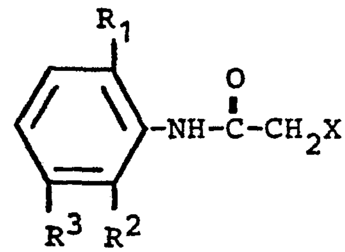

(III) 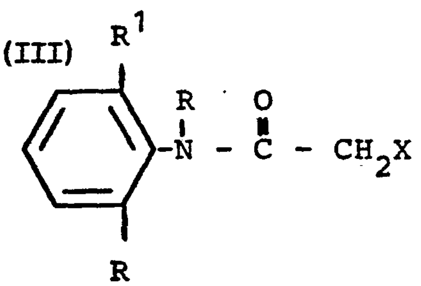 , and

(IV) 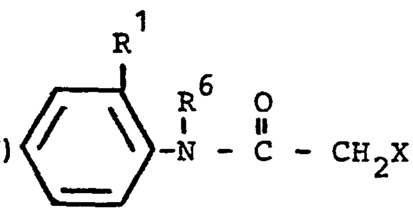

wherein R is alkyl having a maximum of 18 carbon atoms, or phenyl of the structure

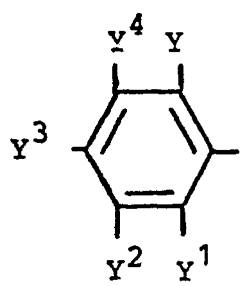

with Y and $Y^1$ being hydrogen, alkyl or alkoxy having a maximum of 10 carbon atoms, and $Y^2$, $Y^3$ and $Y^4$ being hydrogen, halogen, or alkyl having a maximum of 10 carbon atoms, A is oxygen or sulfur, X is chlorine, bromine, or iodine, and Z, $Z^1$ and $Z^2$ are hydrogen, alkyl, hydroxyalkyl, haloalkyl, alkenyl alkynyl, alkoxy or polyalkoxy having from 1 to 18 atoms, aryl having from 6 to 24 atoms, heterocyclyl having a maximum of 24 carbon atoms and from 1 to 3 hetero atoms, or two of Z groups are combined to form a bivalent alkylene radical having from 2 to 6 atoms.

$R^1$ is tertiary alkyl of not less than 4 and a maximum of 10 carbon atoms,

$R^2$ is hydrogen, halogen, alkyl of not more than 8 carbon atoms or alkoxy of not more than 4 carbon atoms,

$R^3$ is hydrogen, primary or secondary alkyl of not more than 6 carbon atoms, chloride or nitro provided that one and not more than one of $R^2$ and $R^3$ is always hydrogen unless $R^3$ is primary or secondary alkyl in which case $R^3$ is as defined above and further provided that $R^2$ is primary or secondary when $R^3$ is chloride or nitro.

$R^4$ is alkyl of not more than 8 carbon atoms,

$R^5$ is primary or secondary alkyl, alkenyl, alkoxyalkyl or alkynyl, each of not more than 6 carbon atoms.

$R^6$ is primary alkyl, alkenyl or alkynyl, each of not more than 4 carbon atoms, and

X is chlorine, bromine or iodine, and (2) a 4-phenoxyphenoxy alkane carboxylic compound having a structural formula

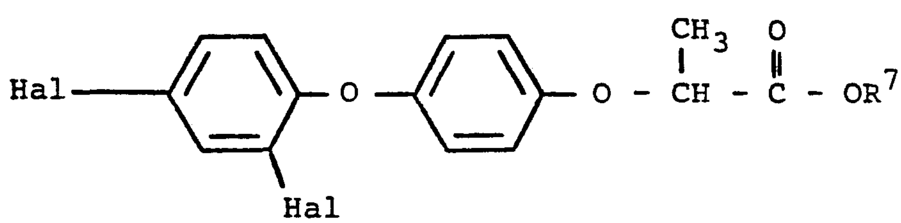

where Hal is a halogen and $R^7$ represents hydrogen, alkyl having 1 to 10 carbon atoms or the cation of an acceptable inorganic or organic base.

13. The method as defined in Claim 12 wherein said composition contains said active ingredient in an amount of from about 2 to 95 percent by weight of said composition.

14. The method as defined in Claim 12 wherein said active ingredient comprises said carboxylic compound where $R^7$ is alkyl of 1 to 3 carbon atoms.

15. The method as defined in Claim 14 wherein said active ingredient comprises said carboxylic compound where Hal is chlorine.

16. The method as defined in Claim 15 wherein said active ingredient comprises methyl-2-(4-(2,4-dichlorophenoxy) phenoxy propanoate having the structural formula

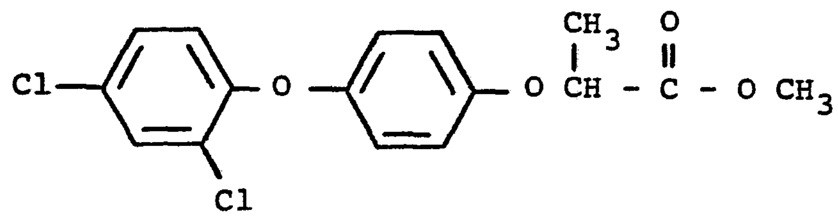

17. The method as defined in Claim 16 wherein said active ingredient comprises 2-chloro-2',6'-diethyl-N-(methoxymethyl)acetanilide, having the structural formula

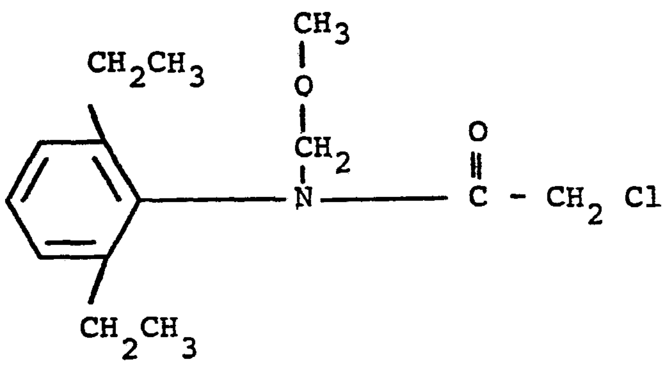

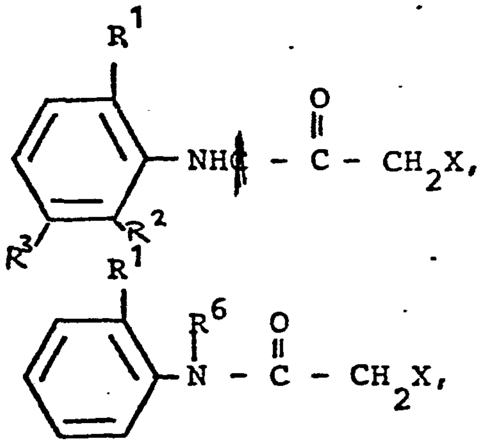

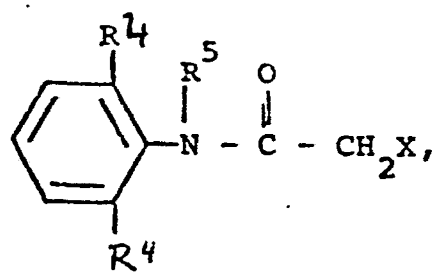 and

wherein R is alkyl having a maximum of 18 carbon atoms or phenyl of the structure

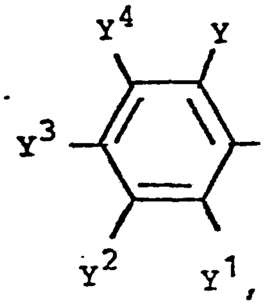

where Y and $Y^1$ are hydrogen, alkyl or alkoxy having a maximum of 10 carbon atoms, and $Y^2$ and $Y^3$ and $Y^4$ are hydrogen, halogen, or alkyl having a maximum of 10 carbon atoms; A is oxygen or sulfur; X is chlorine, bromine or iodine; and Z, $Z^1$ and $Z^2$ are hydrogen alkyl, alkenyl, alkynyl, alkoxy or polyalkoxy each of from1 to 18 carbon atoms, aryl having from 6 to 24 carbon atoms, heterocyclyl having a maximum of 24 carbon atoms and from 1 to 3 hetero atoms, or two of the Z groups are combined to form a bivalent alkylene radical having from 2 to 6 carbon atoms; $R^1$ is tertiary alkyl of not less than 4 and a maximum of 10 carbon atoms; $R^2$ is hydrogen, halogen, alkyl of not more than 8 carbon atoms or alkoxy of not more than 4 carbon atoms; $R^3$ is hydrogen, primary or secondary alkyl of each of not more than 6 carbon atoms, chloride or nitro, provided that one and not more than one of $R^2$ and $R^3$ is always hydrogen unless $R^2$ is primary or secondary alkyl in which case $R^3$ is as defined above and further provided that $R^2$ is primary or secondary alkyl when $R^3$ is chloride

Patent Claims:

1. A herbicidal composition comprising an active ingredient comprising (1) an α-haloacetanilide selected from the groups consisting of

(I)
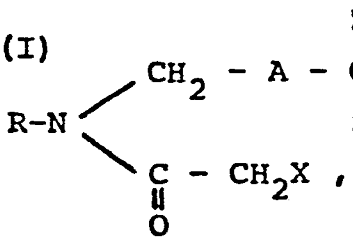

(II)
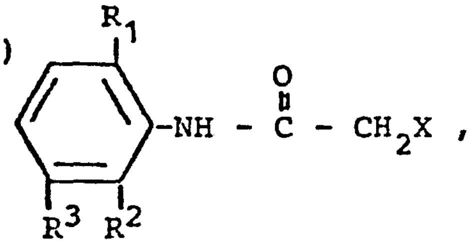

(III)
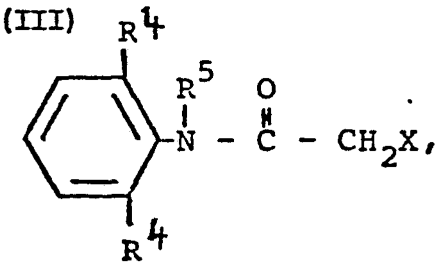
and

(IV)
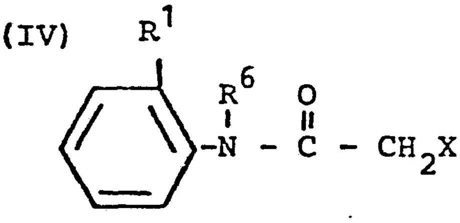

wherein R is alkyl having a maximum of 18 carbon atoms, or phenyl of the structure

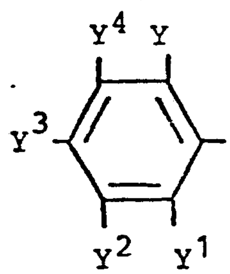

with Y and $Y^1$ being hydrogen, alkyl or alkoxy having a maximum of 10 carbon atoms, and $Y^2$, $Y^3$ and $Y^4$ being hydrogen, halogen, or alkyl having a maximum of 10 carbon atoms, A is oxygen or sulfur, X is chlorine, bromine, or iodine, and Z, $Z^1$ and $Z^2$ are hydrogen, alkyl, hydroxyalkyl, haloalkyl, alkenyl, alkynyl, alkoxy or polyalkoxy having from 1 to 18 carbon atoms, aryl having from 6 to 24 carbon atoms, heterocyclyl having a maximum of 24 carbon atoms and from 1 to 3 hetero atoms, or two of Z groups are combined to form a bivalent alkylene radical having from 2 to 6 carbon atoms.

$R^1$ is tertiary alkyl of not less than 4 and a maximum of 10 carbon atoms,

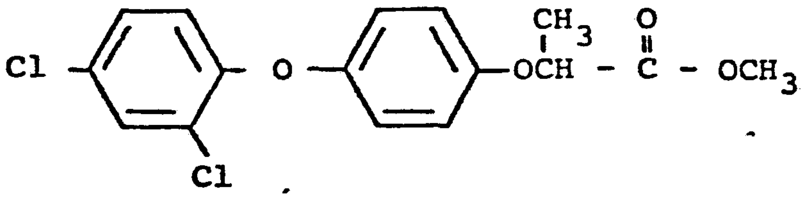

5. The composition as defined in Claim 4 which comprises

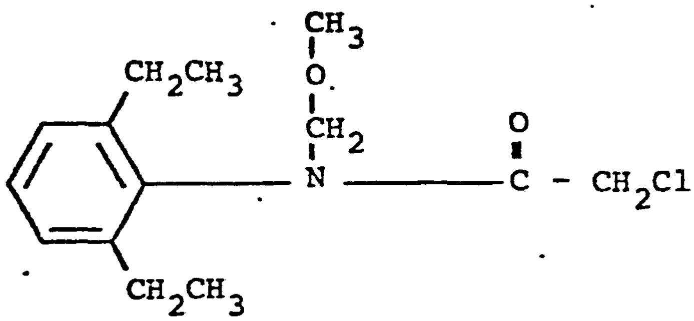

6. A method for combatting weed grasses in plantings of dicotylendenous crops which comprises applying to the planting site an effective concentration of a herbicidal composition comprising an active ingredient comprising (1) an $\alpha$-haloacetanilide selected from the group

(I) 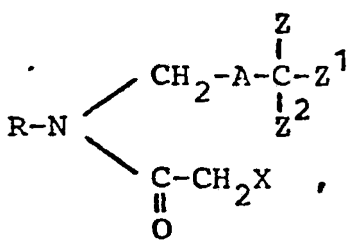 ,

(II) 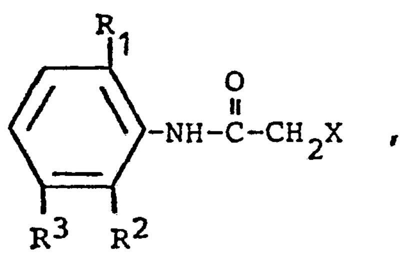 ,

(III) 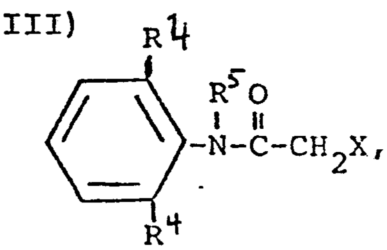 , and (IV) 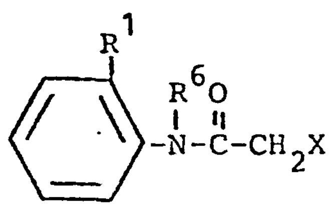

wherein R is alkyl having a maximum of 18 carbon atoms, or phenyl of the structure

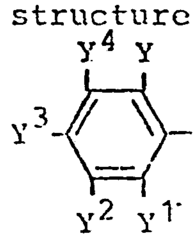

an α-haloacetanilide selected from the group consisting of

(I) 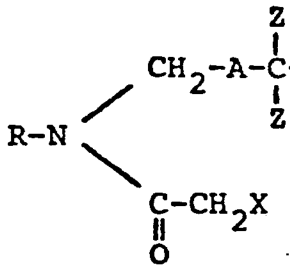 , (II) 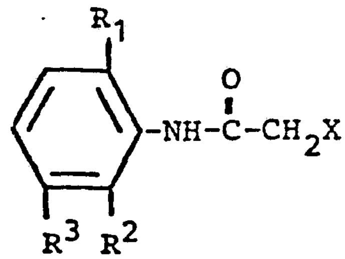

(III) 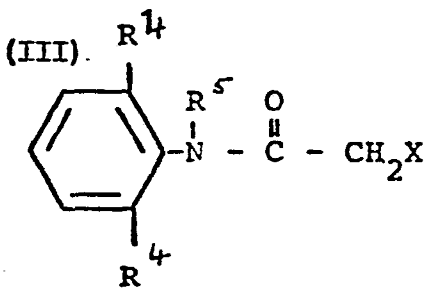 , and (IV) 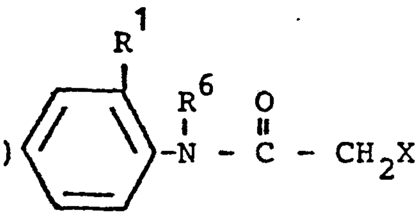

wherein R is alkyl having a maximum of 18 carbon atoms, or phenyl of the structure

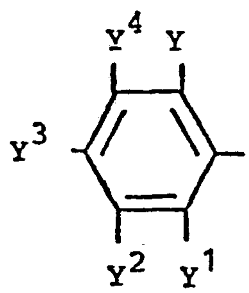

with Y and $Y^1$ being hydrogen, alkyl or alkoxy having a maximum of 10 carbon atoms, and $Y^2$, $Y^3$ and $Y^4$ being hydrogen, halogen, or alkyl having a maximum of 10 carbon atoms, A is oxygen or sulfur, X is chlorine, bromine, or iodine, and Z, $Z^1$ and $Z^2$ are hydrogen, alkyl, hydroxyalkyl, haloalkyl, alkenyl alkynyl, alkoxy or polyalkoxy having from 1 to 18 atoms, aryl having from 6 to 24 atoms, heterocyclyl having a maximum of 24 carbon atoms and from 1 to 3 hetero atoms, or two of Z groups are combined to form a bivalent alkylene radical having from 2 to 6 atoms.

$R^1$ is tertiary alkyl of not less than 4 and a maximum of 10 carbon atoms,

0049397

European Patent Office

# EUROPEAN SEARCH REPORT

Application number
EP 81 10 7356

| DOCUMENTS CONSIDERED TO BE RELEVANT | | | CLASSIFICATION OF THE APPLICATION (Int Cl 3) |
|---|---|---|---|
| Category | Citation of document with indication, where appropriate, of relevant passages | Relevant to claim | |
| D | FR - A - 2 184 906 (HOECHST)<br>* claims; page 7, lines 34-39 *<br>& DE - A - 2 223 894<br>& US - A - 3 954 442<br>& GB - A - 1 423 006<br>& NL - A - 73 06 625<br>----- | 1-17 | A 01 N 39/02 //<br>(A 01 N 39/02<br>37/26<br>37/24<br>37/22<br>37/20) |

TECHNICAL FIELDS SEARCHED (Int. Cl.3)

A 01 N 39/02

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 11-12-1981 | DECORTE |

EPO Form 1503.1 06.78